# EUROPEAN PATENT APPLICATION

(11) **EP 4 772 316 A1**
(43) Date of publication of application: **08.07.2026**
(21) Application number: 24899909.6
(22) Date of filing: 05.12.2024
(51) Int. Cl.: B25J 19/04, B25J 19/00

(54) **VISION DEVICE AND ROBOT**

(30) Priority: 09.12.2023 CN 202323366141 U; 09.12.2023 CN 202323367018 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); XU, Yuanjun, Shenzhen, Guangdong 518000 (CN); XU, Shuwen, Shenzhen, Guangdong 518000 (CN); ZHENG, Wei, Shenzhen, Guangdong 518000 (CN)
(74) Representative: Huang, Liwei
(86) International application number: PCT/CN2024/137093
(87) International publication number: WO 2025/119273

(57) **Abstract**

The present disclosure provides a vision apparatus and a robot. The vision apparatus comprises a vision component and an occlusion component. The occlusion component comprises an occlusion body and a support portion. The occlusion body is disposed on a side of the vision component away from the robot along a height direction of the robot, and a gap is provided between the vision component and the occlusion body. The support portion is connected to an end of the occlusion body, and is provided protruding toward the vision component relative to the occlusion body. The vision component is provided with a fixing portion configured to cooperate with the support portion, and the support portion and the fixing portion are removably disposed along a direction perpendicular to the height direction of the robot. When a user presses the occlusion body, the occlusion body bends toward a direction away from the vision component, and the end of the occlusion body tilts away from the vision component. Driven by the occlusion body, the support portion turns outward away from the vision component along the direction perpendicular to the height direction of the robot, and is separated from the fixing portion. Thus, rapid disassembly and replacement of the occlusion component are realized, and maintenance costs are reduced.

## Description

The present application claims priority to Chinese Patent Application No. 202323366141.9, filed with the China National Intellectual Property Administration on December 09, 2023, and entitled 'VISION APPARATUS AND ROBOT', and Chinese Patent Application No. 202323367018.9, filed with the China National Intellectual Property Administration on December 09, 2023, and entitled 'VISION APPARATUS AND ROBOT', the entire disclosures of which are incorporated herein by reference.

### TECHNICAL FIELD

The present disclosure relates to the technical field of robots, and in particular to a vision apparatus and a robot.

### BACKGROUND

In existing robots equipped with vision apparatuses, the housings of the vision apparatuses are susceptible to aging under solar radiation. Once aged, the entire housing must be replaced, leading to high maintenance costs for the vision apparatus.

### SUMMARY

The present disclosure provides a vision apparatus and a robot to solve the problem that the vision apparatus is susceptible to aging.

In a first aspect, the present disclosure provides a vision apparatus applied to a robot, the vision apparatus comprising a vision component and an occlusion component. The vision component is disposed on the robot. The occlusion component comprising an occlusion body and a support portion, wherein the occlusion body is disposed on a side of the vision component away from the robot along a height direction of the robot, and a gap is defined between the occlusion body and the vision component; wherein the support portion is connected to an end of the occlusion body and protrudes relative to the occlusion body toward the vision component; and wherein the vision component is provided with a fixing portion configured to cooperate with the support portion, and the support portion and the fixing portion are removably disposed along a direction perpendicular to the height direction of the robot.

In some embodiments, the occlusion body is arched.

In some embodiments, the occlusion body comprises a top plate and a first side plate, the first side plate is connected to a side of the top plate, and the first side plate is inclined toward the vision component relative to the top plate.

In some embodiments, along a front-rear direction of the robot, a height of a side of the top plate proximate to a front end of the robot above the ground is less than a height of a side of the top plate proximate to a rear end of the robot above the ground.

In some embodiments, the top plate comprises a main body portion and a first connection portion, the first connection portion is connected between the main body portion and the first side plate, the first connection portion is inclined toward a direction closer to the vision component relative to the main body portion, and is inclined toward a direction away from the vision component relative to the first side plate.

In some embodiments, the occlusion body further comprises a second side plate, the first side plate and the top plate are arranged along a width direction of the robot, the second side plate is connected to a side of the first side plate proximate to the rear end of the robot along the front-rear direction of the robot, and the second side plate is inclined toward the vision component relative to the first side plate.

In some embodiments, the occlusion body further comprises a second connection portion, the second connection portion is connected to a side of the top plate proximate to the rear end of the robot, and a side portion of the second connection portion along the width direction of the robot is connected to the second side plate.

In some embodiments, one of the support portion and the fixing portion is configured as a hook, and the other of the support portion and the fixing portion defines a locking hole configured to engage with the hook.

In some embodiments, a side of the occlusion body toward the vision component is provided with a positioning structure, and the vision component is provided with a cooperating structure configured to cooperate with the positioning structure.

In some embodiments, the positioning structure is slidably disposed relative to the cooperating structure along the height direction of the robot.

In some embodiments, the vision apparatus further comprises a reinforcing rib connected to the support portion and the occlusion body respectively.

In some embodiments, the vision apparatus further comprises a heat dissipation structure disposed between the vision component and the occlusion body, and the heat dissipation structure is thermally conductively connected to the vision component.

In some embodiments, the heat dissipation structure is spaced apart from the shielding body.

In some embodiments, the heat dissipation structure comprises a plurality of heat dissipation fins arranged at intervals.

In some embodiments, along the front-rear direction of the robot, the occlusion body is provided with an air outlet communicating with the gap at a middle position proximate to the rear end of the robot.

In some embodiments, the occlusion body is provided protruding toward a front end of the robot relative to the vision component along the front-rear direction of the robot, and/or, the occlusion body is provided protruding relative to the vision component along the width direction of the robot.

In some embodiments, a reflective structure is provided on a side of the occlusion body away from the vision component.

In some embodiments, the vision apparatus comprises a support base, the support base is fixedly connected to a traveling apparatus, the vision component is fixedly connected to an end of the support base away from the traveling apparatus, the vision component is provided protruding relative to the support base along the width direction of the traveling apparatus, and a first heat dissipation airflow channel is formed between the portion of the vision component convexed relative to the support base and the traveling apparatus.

In some embodiments, along the width direction of the traveling apparatus, a height of a side of the first heat dissipation airflow channel proximate to the support base is less than a height of a side away from the support base.

In some embodiments, the vision component comprises a first housing and a second housing, along the front-rear direction of the traveling apparatus, the second housing is connected to a rear end of the first housing, the first heat dissipation airflow channel comprises a first heat dissipation section and a second heat dissipation section, the first heat dissipation section is located between the first housing and the traveling apparatus, and the second heat dissipation section is located between the second housing and the traveling apparatus.

In some embodiments, a height along a height direction of the traveling apparatus of an end of the first heat dissipation section away from the second heat dissipation section is greater than a height along the height direction of the traveling apparatus of an end of the first heat dissipation section proximate to the second heat dissipation section.

In some embodiments, a height along a height direction of the traveling apparatus of an end of the second heat dissipation section proximate to the first heat dissipation section is less than or equal to a height along the height direction of the traveling apparatus of an end of the second heat dissipation section away from the first heat dissipation section.

In some embodiments, a dimension along a height direction of the traveling apparatus of an end of the second housing proximate to the first housing is greater than a dimension along the height direction of the traveling apparatus of an end of the second housing away from the first housing.

In some embodiments, the vision apparatus further comprises a fixing seat, the fixing seat is connected between the traveling apparatus and the support base, the fixing seat is provided protruding relative to the support base along the width direction of the traveling apparatus, a first heat dissipation airflow channel is formed between the fixing seat and the vision component, and a plurality of heat dissipation sheets located within the first heat dissipation airflow channel are provided on the vision component and/or the fixing seat.

In some embodiments, the vision component is provided with a first heat dissipation sheet located in the first heat dissipation airflow channel, the fixing seat is provided with a second heat dissipation sheet located in the first heat dissipation airflow channel, and from a front end toward a rear end of the traveling apparatus, a distance along the height direction of the traveling apparatus between the first heat dissipation sheet and the second heat dissipation sheet decreases.

In some embodiments, the plurality of heat dissipation sheets arranged at intervals along the width direction of the traveling apparatus.

In some embodiments, the occlusion component is provided protruding toward a front end of the traveling apparatus relative to the vision component along a front-rear direction of the traveling apparatus.

In some embodiments, the occlusion component is provided protruding relative to the vision component along a width direction of the traveling apparatus.

In some embodiments, the occlusion component is provided protruding toward the front end of the traveling apparatus relative to the vision component along the front-rear direction of the traveling apparatus, and the occlusion component is provided protruding relative to the vision component along the width direction of the traveling apparatus.

In some embodiments, a surface of a side of the support base toward the front end of the traveling apparatus along the front-rear direction of the traveling apparatus is configured as an air guiding surface, and a side of the air guiding surface proximate to the vision component is inclined toward the rear end of the traveling apparatus relative to a side of the air guiding surface proximate to the traveling apparatus.

In some embodiments, a side of the vision component toward the occlusion component is provided with a protrusion, and along the height direction of the traveling apparatus, a height of a side of the protrusion proximate to the front end of the traveling apparatus along the front-rear direction of the traveling apparatus above the ground is less than a height of a side proximate to the rear end of the traveling apparatus above the ground.

In some embodiments, the protrusion and the air guiding surface are arranged side by side along the front-rear direction of the traveling apparatus.

In some embodiments, the side of the vision component toward the occlusion component is provided with a plurality of heat dissipation fins, and the plurality of heat dissipation fins arranged at intervals along the width direction of the traveling apparatus.

In some embodiments, the plurality of heat dissipation fins comprise a first heat dissipation fin group and a second heat dissipation fin group, each of the first heat dissipation fin group and the second heat dissipation fin group comprises a plurality of heat dissipation fins, the first heat dissipation fin group is disposed on the protrusion, and the second heat dissipation fin group is disposed on the vision component at a position other than the protrusion.

In a second aspect, the present disclosure provides a robot, the robot comprising a traveling apparatus and the vision apparatus as described in any one of the above items, the vision apparatus being disposed on the traveling apparatus.

In the vision apparatus and robot provided by the present disclosure, by disposing an occlusion component on a side of the vision component away from the robot along the height direction of the robot, a gap is provided between the occlusion body of the occlusion component and the vision component, and a support portion of the occlusion component is connected to an end of the occlusion body, and the support portion and a fixing portion on the vision component are removably disposed along a direction perpendicular to the height direction of the robot. On one hand, when installing the occlusion component on the vision component, the occlusion component may be directly placed above the vision component, and the support portion and the fixing portion may be fixedly connected together by pressing the occlusion body downward; when disassembling the occlusion component from the vision component, the user may press the occlusion body, causing the occlusion body to bend toward a direction away from the vision component, and the end of the occlusion body tilts away from the vision component. The support portion at the end of the occlusion body, driven by the occlusion body, turns outward toward a direction away from the vision component along a direction perpendicular to the height direction of the robot, and is separated from the fixing portion, thereby realizing rapid installation and rapid disassembly of the occlusion component, avoiding replacement of the vision component as a whole, and reducing maintenance costs of the robot. On the other hand, the occlusion body can shade sunlight, avoiding direct sunlight on the vision component, and heat generated by the vision component during work can dissipate into the air in the gap between the occlusion body and the vision component. The air in the gap can also form a heat insulation layer, avoiding heat conduction from the occlusion body to the vision component, thus preventing the internal temperature of the vision component from exceeding a preset working temperature, and ensuring that the vision component can continue to work normally.

### BRIEF DESCRIPTION OF THE DRAWINGS

FIG. 1 is a partial cross-sectional view of a robot according to an embodiment of the present disclosure.
FIG. 2 is an exploded view of a vision apparatus according to an embodiment of the present disclosure.
FIG. 3 is a structural schematic diagram of a vision apparatus according to an embodiment of the present disclosure.
FIG. 4 is a structural schematic diagram of an occlusion component from one perspective according to an embodiment of the present disclosure.
FIG. 5 is a structural schematic diagram of an occlusion component from another perspective according to an embodiment of the present disclosure.
FIG. 6 is a partial cross-sectional view of a vision apparatus according to an embodiment of the present disclosure.
FIG. 7 is a structural schematic diagram of an occlusion component after being pressed and deformed according to an embodiment of the present disclosure.
FIG. 8 is a structural schematic diagram of an occlusion component according to some embodiments of the present disclosure.
FIG. 9 is a partial structural diagram of a robot according to an embodiment of the present disclosure.

### Description of Main Reference Numerals:

Robot 100; machine body 101; traveling apparatus 110; installation surface 1101; vision apparatus 10; vision component 11; housing 111; first housing 1101; second housing 1102; fixing portion 1111; cooperating structure 1112; camera hole 1113; protrusion 1114; heat dissipation structure 12; heat dissipation fin 1211; first heat dissipation fin group 121; second heat dissipation fin group 122; third heat dissipation fin group 123; vision assembly 13; camera 131; circuit board 132; fixing bracket 133; protective member 134; connection cable 135; occlusion component 20; occlusion body 200; gap 201; air outlet 202; top plate 21; main body portion 211; first connection portion 212; second connection portion 213; first side plate 22; second side plate 23; support portion 24; reinforcing rib 241; positioning structure 25; heat dissipation airflow channel 301; first heat dissipation section 3011; second heat dissipation section 3012; fixing seat 31; heat dissipation sheet 311; first heat dissipation sheet 3111; second heat dissipation sheet 3112; connector 312; support base 32; connection hole 321; air guiding surface 322.

### DETAILED DESCRIPTION

The technical solutions in the embodiments of the present disclosure will be clearly and completely described below in conjunction with the drawings in the embodiments of the present disclosure. Obviously, the described embodiments are only a part of the embodiments of the present disclosure, rather than all of them. All other embodiments obtained by those of ordinary skill in the art based on the embodiments in the present disclosure without creative effort shall fall within the protection scope of the present disclosure.

Mentioning 'an embodiment' or 'an implementation' herein means that specific features, structures, or characteristics described in conjunction with the embodiment or implementation may be included in at least one embodiment of the present disclosure. The appearance of the phrase in various positions in the specification does not necessarily refer to the same embodiment, nor is it an independent or alternative embodiment mutually exclusive with other embodiments. Those skilled in the art explicitly and implicitly understand that the embodiments described herein may be combined with other embodiments.

It should be noted that terms in the specification, claims, and the above drawings of the present disclosure are only for describing specific embodiments, and are not intended to limit the present disclosure. The terms 'first', 'second', etc., in the specification, claims, and the above drawings of the present disclosure are used to distinguish different objects, rather than to describe a specific order. The term 'and/or' used in the specification and the appended claims of the present disclosure refers to any combination and all possible combinations of one or more of the associated listed items, and includes these combinations.

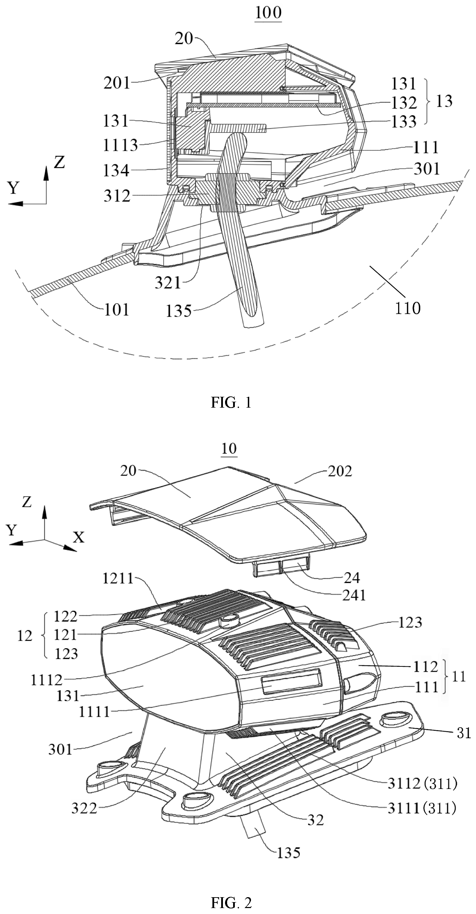

Please refer to FIG. 1 and FIG. 2 together. FIG. 1 is a partial cross-sectional view of a robot 100 according to an embodiment of the present disclosure; FIG. 2 is an exploded view of a vision apparatus 10 according to an embodiment of the present disclosure. The present disclosure provides a robot 100, which comprises a machine body 101 and a vision apparatus 10 disposed on the machine body 101. The vision apparatus 10 is applied to the robot 100. The vision apparatus 10 is configured to obtain image information on a travel route of the robot 100, and a controller of the robot 100 judges current road conditions based on the image information obtained by the vision apparatus 10, thereby controlling and adjusting the travel route and working state of the robot 100. Wherein, the robot 100 may be a four-wheel walking robot, a lawn mowing robot, a pesticide spraying robot, a crop harvesting robot, or the like.

For clearer description, in the present disclosure, the X-axis direction is defined as a width direction of the robot 100, the Y-axis direction is defined as a front-rear direction of the robot 100, and the Z-axis direction is defined as a height direction of the robot 100. The length direction, width direction, and height direction of the robot 100 are mutually perpendicular to each other. The positive direction of the Y-axis is a front end direction of the robot 100, and the negative direction of the Y-axis is a rear end direction of the robot 100. When the robot 100 works, traveling along the positive direction of the Y-axis is moving forward, and traveling along the negative direction of the Y-axis is moving backward. For ease of description, the front, rear, left, right, up, and down positions in the present disclosure are relative positions and do not constitute absolute limitations. The front-rear direction, width direction, and height direction of the robot 100 may be customized according to specific structures of products and cross-sectional perspective views in the drawings, and are not specifically limited in the present disclosure.

The vision apparatus 10 comprises a vision component 11 and an occlusion component 20. The vision component 11 is disposed on the machine body 101 of the robot 100. The occlusion component 20 comprises an occlusion body 200 and a support portion 24. The occlusion body 200 is disposed on a side of the vision component 11 away from the robot 100 along the height direction Z of the robot 100, and a gap 201 is formed between the occlusion body 200 and the vision component 11. The support portion 24 is connected to an end of the occlusion body 200, and is provided protruding toward the vision component 11 relative to the occlusion body 200. The vision component 11 is provided with a fixing portion 1111 configured to cooperate with the support portion 24. The support portion 24 and the fixing portion 1111 are removably disposed along a direction perpendicular to the height direction Z of the robot 100. In at least one embodiment, by disposing the occlusion component 20 on the side of the vision component 11 away from the robot 100 along the height direction Z of the robot 100, the gap 201 is formed between the occlusion body 200 of the occlusion component 20 and the vision component 11, and the support portion 24 of the occlusion component 20 is connected to the end of the occlusion body 200, and the support portion 24 and the fixing portion 1111 on the vision component 11 are removably disposed along the direction perpendicular to the height direction Z of the robot 100. On one hand, when installing the occlusion component 20 on the vision component 11, the user may directly place the occlusion component 20 above the vision component 11 and fixedly connect the support portion 24 and the fixing portion 1111 together by pressing the occlusion body 200 downward; when disassembling the occlusion component 20 from the vision component 11, the user may press the occlusion body 200, causing the occlusion body 200 to bend toward the direction away from the vision component 11. The end of the occlusion body 200 tilts away from the vision component 11. The support portion 24 located at the end of the occlusion body 200, driven by the occlusion body 200, turns outward toward the direction away from the vision component 11 along the X-axis direction perpendicular to the height direction of the robot 100, and is separated from the fixing portion 1111, thereby realizing rapid installation and disassembly of the occlusion component 20. When the occlusion component 20 ages, it may be replaced in time, thus avoiding replacing the vision component as a whole and reducing the maintenance cost of the robot 100. On the other hand, the occlusion body 200 can shade sunlight, avoiding direct sunlight on the vision component 11. The air in the gap 201 can also form a heat insulation layer, avoiding heat conduction from the occlusion body 200 to the vision component 11, thus preventing the internal temperature of the vision component 11 from exceeding a preset working temperature, ensuring the vision component 11 can continue to work normally. The occlusion component 20 can also protect the vision component 11, avoiding direct falling of external sundries on the vision component 11 resulting in damage to the vision component 11. Wherein, the occlusion component 20 may be configured as an elastic structure. When the occlusion component 20 is pressed, it may undergo elastic deformation. For example, the occlusion component 20 may be configured as a plastic structure.

The vision apparatus 10 further comprises a heat dissipation structure 12, which is disposed between the vision component 11 and the occlusion component 20. The heat dissipation structure 12 is thermally conductively connected to the vision component 11. The heat dissipation structure 12 can improve heat dissipation efficiency of the vision component 11, so that heat generated during the work of the vision component 11 can be dissipated more quickly into the air in the gap 201. Wherein, the heat dissipation structure 12 and the occlusion body 200 can be spaced apart to avoid heat conduction from the occlusion body 200 to the vision component 11 through the heat dissipation structure 12.

The heat dissipation structure 12 may comprise a plurality of heat dissipation fins 1211 spaced apart along the width direction X of the robot 100. The heat dissipation fins 1211 are fixedly connected to the vision component 11. Exemplarily, the heat dissipation fins 1211 may be integrally formed with the vision component 11. The heat dissipation fins 1211 can increase a surface area of the vision component 11 and increase the contact area between the vision component 11 and the air, thereby improving heat dissipation efficiency. In at least one embodiment, the heat dissipation fins 1211 may be disposed parallel to each other. The heat dissipation fins 1211 are disposed extending along the front-rear direction Y of the robot 100, so that an airflow can better take away heat from the heat dissipation fins 1211. In some embodiments, part of the heat dissipation fins 1211 among the plurality of heat dissipation fins 1211 may be disposed at an angle to each other. The housing of the vision component 11 may be configured as a metal part, thereby improving heat dissipation capacity of the vision component 11.

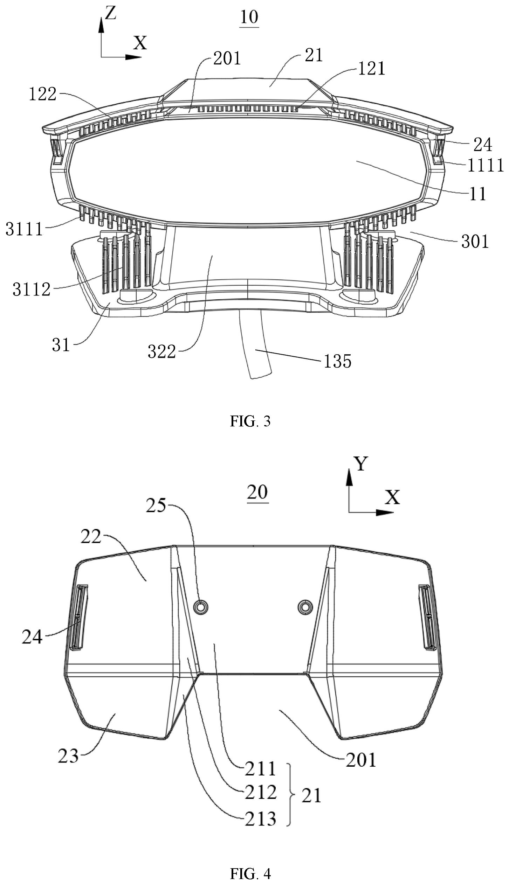

Please refer to FIG. 1 and FIG. 3 together. FIG. 3 is a structural schematic diagram of the vision apparatus 10 from one perspective according to an embodiment of the present disclosure. The occlusion body 200 is provided protruding toward the front end of the robot 100 relative to the vision component 11 along the front-rear direction Y of the robot 100, and/or, the occlusion body 200 is provided protruding relative to the vision component 11 along the width direction X of the robot 100. Exemplarily, In at least one embodiment, the occlusion body 200 is provided protruding toward the front end of the robot 100 relative to the vision component 11 along the front-rear direction Y of the robot 100, and the occlusion body 200 is provided protruding relative to the vision component 11 along the width direction X of the robot 100. On one hand, the occlusion body 200 can shade the front end of the vision component 11, reducing or avoiding direct sunlight on the camera of the vision component 11, thereby avoiding problems such as glare and overexposure of the camera during imaging, which would degrade imaging effect of the camera. On the other hand, the occlusion body 200 is provided protruding toward the front end relative to the vision component 11 can also stop and guide air spreading toward the occlusion body 200 when hitting the vision component 11 during the movement of the robot 100, letting the air enter the gap 201, thereby increasing the air intake of the gap 201 and improving heat dissipation efficiency. On another hand, the occlusion body 200 can shade a side portion of the vision component 11 along the width direction X of the robot 100, reducing or avoiding direct sunlight on the side portion of the vision component 11, which would increase temperature of the vision component 11, and providing hands-on stress points for the user when the user disassembles or installs the occlusion component 20, thereby facilitating the user to pick and place the occlusion component 20. Wherein, the convex length of the occlusion body 200 relative to the vision component 11 may be specifically set according to actual needs, as long as it may meet work requirements of the vision component 11, which is not specifically limited in the present disclosure. In some embodiments, the occlusion body 200 may be provided protruding toward the front end of the robot 100 relative to the vision component 11 along the front-rear direction Y of the robot 100. In some embodiments, the occlusion body 200 is provided protruding relative to the vision component 11 along the width direction X of the robot 100.

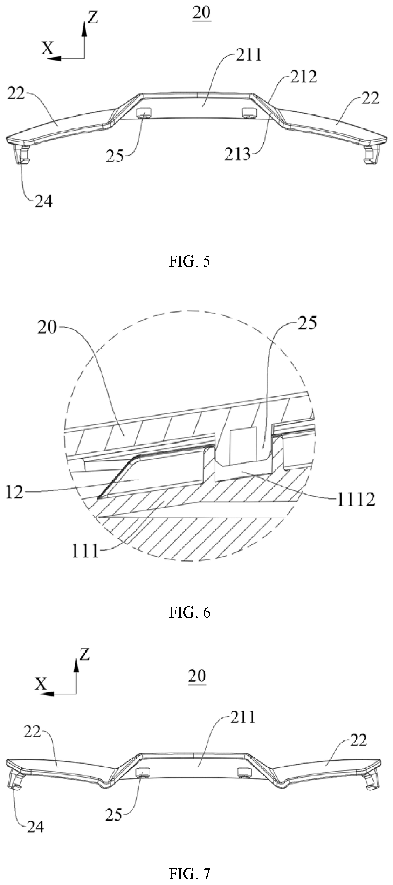

Please refer to FIG. 2, FIG. 4, and FIG. 5 together. Along the front-rear direction Y of the robot 100, the occlusion body 200 is provided with an air outlet 202 communicating with the gap 201 at a middle portion proximate to the rear end of the robot 100. The air outlet 202 is configured to let air in the gap 201 heated after heat dissipation flow out of the gap 201, so that external unheated air enters the gap 201 and absorbs heat dissipated by the heat dissipation structure 12 and the vision component 11, thereby forming airflow in the gap 201 and improving heat dissipation efficiency. Disposing the air outlet 202 proximate to the rear end of the robot 100 can make the movement direction of the robot 100 when traveling forward the same as the airflow direction in the gap 201, improving the flow speed of air in the gap 201, timely letting heated air flow out from the air outlet 202, and avoiding hot air from staying in the gap 201, thereby improving heat dissipation effect on the heat dissipation structure 12 and the vision component 11.

In at least one embodiment, the occlusion body 200 is arched, and the middle portion of the occlusion body 200 along the width direction X of the robot 100 is arched away from the vision component 11. The gap 201 is shaped as high in the middle and low on four sides. After air in the gap 201 is heated, it rises due to thermal buoyancy, flows from four sides of the gap 201 toward the middle, and flows out from the air outlet 202. External unheated air can enter the gap 201 from the side proximate to the front end of the robot 100 and from sides along the width direction X of the robot 100, thereby increasing air intake of the gap 201 and improving heat dissipation effect.

The occlusion body 200 comprises a top plate 21 and a first side plate 22. The first side plate 22 is connected to a side of the top plate 21. The first side plate 22 is inclined toward the vision component 11 relative to the top plate 21. When the robot 100 is placed on the ground, along the height direction Z of the robot 100, a height of a side of the first side plate 22 proximate to the top plate 21 above the ground is greater than a height of a side away from the top plate 21 above the ground. Wherein, the first side plates 22 are two, and the two first side plates 22 are connected to each of two sides of the top plate 21. The two first side plates 22 and the top plate 21 are connected together to form an arched structure. The support portions 24 may be two. The two support portions 24 are respectively located at ends of the two first side plates 22 away from the top plate 21.

A side of the top plate 21 proximate to the rear end of the robot 100 is inclined away from the vision component 11 relative to a side proximate to the front end of the robot 100, so that the gap 201 is shaped low at the front and high at the rear along the front-rear direction Y of the robot 100. Specifically, along the front-rear direction Y of the robot 100, a height of the side proximate to the front end above the ground is less than a height of the side proximate to the rear end above the ground. The air outlet 202 is located at the side proximate to the rear end of the top plate 21. The occlusion body 200 and the vision component 11 form an air inlet of the gap 201 at the side proximate to the front end. The gap 201 is disposed extending along the front-rear direction Y of the robot 100. In at least one embodiment, after air in the gap 201 is heated, due to small density of hot air, hot air can spontaneously flow from the inlet toward the outlet 202 of the gap 201 under action of buoyancy, so that when the robot 100 is in a stationary state, gas in the gap 201 can spontaneously form flow, thus avoiding stay of hot air in the gap 201 and improving heat dissipation effect on the vision component 11 and the heat dissipation structure 12. The vision component 11 is provided with a protrusion at a position corresponding to the top plate 21, and a height of a side of the protrusion proximate to the front end above the ground is less than a heigh of a side proximate to the rear end along the front-rear direction Y of the robot 100 above the ground. A portion of the gap 201 corresponding to the top plate 21 disposed extending inclined upward from the front toward the rear, to facilitate spontaneous flow of hot air in the gap 201, and letting moisture or sundries slide out from the gap 201 by themselves when moisture or sundries enter the gap 201.

The heat dissipation structure 12 comprises a first heat dissipation fin group 121 and a second heat dissipation fin group 122. The first heat dissipation fin group 121 is located between the top plate 21 and the vision component 11. The second heat dissipation fin group 122 is located between the first side plate 22 and the vision component 11. Each of the first heat dissipation fin group 121 and the second heat dissipation fin group 122 comprises a plurality of heat dissipation fins 1211.

In at least one embodiment, the top plate 21 comprises a main body portion 211 and a first connection portion 212. The first connection portion 212 is connected between the main body portion 211 and the first side plate 22. The first connection portion 212 is inclined toward a direction closer to the vision component 11 relative to the main body portion 211, and is inclined toward a direction away from the vision component 11 relative to the first side plate 22. The main body portion 211 is generally trapezoidal, the first connection portion 212 is generally triangular, and a long side of the first connection portion 212 is connected with a bevel of the main body portion 211. Along the front-rear direction Y of the robot 100, a height of a side of the main body portion 211 proximate to the front end above the ground is less than a height of a side proximate to the rear end above the ground. Setting of the first connection portion 212 can improve elastic deformation capability of the occlusion body 200 at the position of the first connection portion 212, so that when the user presses the main body portion 211, the first side plate 22 bends away from the vision component 11 relative to the main body portion 211, which facilitates separation of the support portion 24 and the fixing portion 1111, thereby facilitating disassembly of the occlusion component 20 and the vision component 11.

The occlusion body 200 further comprises a second side plate 23. In at least one embodiment, the first side plate 22 and the top plate 21 are arranged along the width direction X of the robot 100. The second side plate 23 is connected to a side toward the rear end of the robot 100 along the front-rear direction Y of the robot 100 of the first side plate 22. The second side plate 23 is inclined toward the vision component 11 relative to the first side plate 22. The heat dissipation structure 12 further comprises a third heat dissipation fin group 123, which is located between the second side plate 23 and the vision component 11. The third heat dissipation fin group 123 comprises a plurality of heat dissipation fins 1211. The heat dissipation fins 1211 in the third heat dissipation fin group 123 may be disposed aligned with heat dissipation fins 1211 in the second heat dissipation fin group 122 along the front-rear direction Y of the robot 100.

The occlusion body 200 further comprises a second connection portion 213. The second connection portion 213 is connected to a side proximate to the rear end of the robot 100 of the top plate 21. a side portion of the second connection portion 213 along the width direction X of the robot 100 is connected with the second side plate 23. The second connection portion 213 is inclined away from the vision component 11 relative to the second side plate 23. The second connection portion 213 can shade sunlight from the side and avoid direct sunlight on the vision component 11. The second connection portions 213 are two. The two second connection portions 213 are spaced apart along the width direction X of the robot 100, and the air outlet 202 is formed between the two second connection portions 213.

In at least one embodiment, the main body portion 211, the first connection portion 212, the first side plate 22, the second side plate 23, and the second connection portion 213 are integrally formed to reduce manufacturing cost. In some embodiments, one or more of the main body portion 211, the first connection portion 212, the first side plate 22, the second side plate 23, and the second connection portion 213 can be independently formed.

Please refer to FIG. 2, FIG. 5, FIG. 6, and FIG. 7 together. The support portion 24 and the fixing portion 1111 may be snap-connected. One of the support portion 24 and the fixing portion 1111 is configured as a hook, and the other defines a locking hole configured to engage with the hook. The hook is configured to cooperate and fix with the locking hole. After the hook is snapped into the locking hole, the locking hole can limit the movement of the hook. Exemplarily, in at least one embodiment, the support portion 24 is configured as a hook, and the fixing portion 1111 is configured as a locking hole defined at a side portion of the vision component 11 along the width direction X of the robot 100. When installing the occlusion component 20, the user may press the occlusion component 20 on the vision component 11 along the height direction of the robot 100, so that the hook is snapped into the locking hole. When disassembling the occlusion component 20, after the user presses the top plate 21, the top plate 21 and the first side plate 22 bend away from the vision component 11. The end away from the top plate 21 of the first side plate 22 tilts away from the vision component 11, and drives the support portion 24 to turn outward away from the vision component 11. The hook is detached from the locking hole, thus realizing disassembly of the occlusion component 20 and the vision component 11.

In at least one embodiment, a side toward the vision component 11 of the occlusion body 200 is provided with a positioning structure 25. The vision component 11 is provided with a cooperating structure 1112 configured to cooperate with the positioning structure 25. The positioning structure 25 may be provided at a side toward the vision component 11 of the main body portion 211 of the top plate 21. The positioning structure 25 and the cooperating structure 1112 are used to position the occlusion component 20 when it is installed on the vision component 11, to facilitate alignment and snap-fitting of the support portion 24 and the fixing portion 1111. After the occlusion component 20 is installed on the vision component 11, the positioning structure 25 may further support the occlusion component 20, making the occlusion component 20 fixed relative to the vision component 11, thus enabling the support portion 24 to be more stably snapped into the fixing portion 1111, avoiding detachment of the support portion 24 from the fixing portion 1111. One of the positioning structure 25 and the cooperating structure 1112 may be configured as a positioning pin, and the other may be configured as a positioning slot or positioning hole. Exemplarily, the positioning structure 25 may be configured as a positioning pin, and the cooperating structure 1112 may be configured as a positioning hole. The support portions 24 may be two. The two support portions 24 are respectively located at ends of the two first side plates 22 away from the top plate 21, and are located on a side toward the vision component 11 of the first side plate 22. The positioning structures 25 may be two. The two positioning structures 25 are located between the two support portions 24 and are spaced apart from the support portions 24.

In some embodiments, the positioning structure 25 is slidably disposed relative to the cooperating structure 1112 along the height direction Z of the robot 100. When the occlusion body 200 is pressed, the positioning structure 25 scales along the height direction Z of the robot 100 relative to the cooperating structure 1112, increasing bending deformation of the top plate 21, letting the end of the first side plate 22 away from the top plate 21 tilt more toward a direction away from the vision component 11, and reducing disassembly difficulty of the occlusion component 20 and the vision component 11. In some cases, when the positioning structure 25 slides until it abuts against the vision component 11, due to blocking action of the positioning structure 25, the user may further cause the top plate 21 to bend when pressing the top plate 21, thereby further letting the end toward the vision component 11 of the first side plate 22 tilt away from the vision component 11.

In some embodiments, the vision apparatus 10 further comprises a reinforcing rib 241 connected to the support portion 24 and the occlusion body 200 respectively, to reinforce connection strength of the support portion 24 and the occlusion body 200. The reinforcing rib 241 can be provided on a side away from the middle of the occlusion body 200 along the width direction X of the robot 100. In some embodiments, a side away from the vision component 11 of the occlusion body 200 is provided with a reflection structure, which is used to reflect sunlight on the occlusion body 200 and reduce heat absorbed by the occlusion body 200. Wherein, the reflection structure may be configured as a surface of the outer side of the occlusion body 200, which is polished and smooth to reflect light. For example, the occlusion body 200 can be polished to make its surface smooth. In some implementations, the reflection structure can also be a reflecting coating on the outer side of the occlusion body 200, which has higher reflectivity for light, such as aluminized coating, tin coating, magnesium coating, and the like.

In some embodiments, the top plate 21 and the first side plate 22 may be arranged along the front-rear direction Y of the robot 100, and two first side plates 22 are connected to two sides of the top plate 21 along the front-rear direction Y of the robot 100. Wherein, the support portion 24 is provided at an end of the first side plate 22 away from the top plate 21 along the front-rear direction Y of the robot 100, and is located on the side of the first side plate 22 toward the vision component 11. The support portion 24 and the occlusion body 200 may be integrally formed, or the support portion 24 and the occlusion body 200 may be separately formed and fixedly connected together by welding, fusing, bonding, snap-fitting, or the like. In some embodiments, the top plate 21 and the first side plate 22 may be arranged in other suitable directions, which is not specifically limited in the present disclosure.

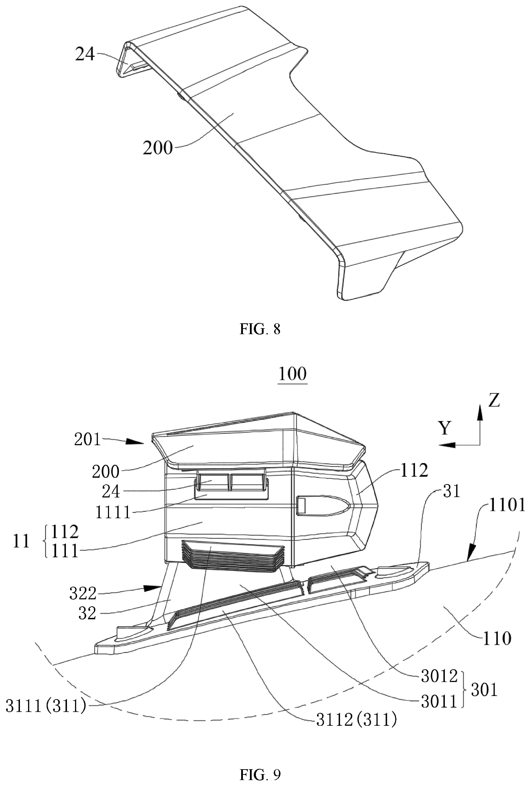

Please refer to FIG. 8, which is a structural schematic diagram of an occlusion component 20 according to some embodiments of the present disclosure. The occlusion body 200 of the occlusion component 20 is generally plate-shaped. The support portion 24 is bent and disposed toward the vision component 11 relative to the occlusion body 200. A snap-fit protrusion configured to cooperate with the locking hole is convexly provided on a side of the support portion 24 toward the vision component 11. When the occlusion component 20 is installed on the vision component 11, the snap-fit protrusion is accommodated in the locking hole. The occlusion body 200 has elasticity. When the user presses the occlusion body 200, the occlusion body 200 undergoes downward concave deformation toward the vision component 11, and the support portion 24 turns outward relative to the vision component 11 due to the deformation of the occlusion body 200, so that the snap-fit protrusion is detached from the locking hole, realizing disassembly of the occlusion component 20 and the vision component 11. It should be noted that the setting manner of the occlusion body 200 and the support portion 24 in the embodiment shown in FIG. 8 can be combined with other embodiments herein, or applied in other embodiments herein.

Please refer to FIG. 3 and FIG. 9 together. FIG. 9 is a partial cross-sectional view of the robot 100 according to an embodiment of the present disclosure. The present disclosure provides a robot 100, which comprises a traveling apparatus 110 and a vision apparatus 10. The vision apparatus 10 further comprises a support base 32. The support base 32 is fixedly connected to the traveling apparatus 110. When the robot 100 works, the support base 32 is located at a side of the traveling apparatus 110 away from the ground. The vision component 11 is fixedly connected to an end of the support base 32 away from the traveling apparatus 110. The vision component 11 is provided protruding relative to the support base 32 along the width direction X of the traveling apparatus 110. A heat dissipation airflow channel 301 is formed between the portion of the vision component 11 convexed relative to the support base 32 and the traveling apparatus 110. During traveling of the traveling apparatus 110, an airflow will be formed when external air flows through the heat dissipation airflow channel 301. The airflow in the heat dissipation airflow channel 301 exchanges heat with the vision component 11 and the support base 32, and heat generated by the vision component 11 is dissipated into the air through the heat dissipation airflow channel 301, so that on the basis of spontaneous heat dissipation of the vision component 11, heat of the vision component 11 is further dissipated through the airflow in the heat dissipation airflow channel 301, which improves heat dissipation efficiency of the vision component 11, thereby avoiding the internal temperature of the vision component 11 from exceeding a preset working temperature and ensuring that the robot 100 can continue to work normally.

Please refer to FIG. 1, FIG. 2, and FIG. 3 together. The vision apparatus 10 further comprises a fixing seat 31 and a support base 32. The fixing seat 31 is connected between the traveling apparatus 110 and the support base 32. The fixing seat 31 is provided protruding relative to the support base 32 along the width direction X of the traveling apparatus 110, to improve connection stability between the support base 32 and the traveling apparatus 110, and reduce vibration generated by the vision component 11 when the traveling apparatus 110 travels. The heat dissipation airflow channel 301 is formed between the fixing seat 31 and the vision component 11. An installation surface 1101 on the traveling apparatus 110 for installing the fixing seat 31 is inclined toward the ground direction, and a height of a side of the fixing seat 31 proximate to a front end of the traveling apparatus 110 above the ground is less than a height of a side proximate to a rear end of the traveling apparatus 110 above the ground. When the traveling apparatus 110 travels, air flows along the installation surface 1101 and is guided by the installation surface 1101 to flow into the heat dissipation airflow channel 301.

Along the width direction X of the traveling apparatus 110, a height of a side of the heat dissipation airflow channel 301 proximate to the support base 32 is less than a height of a side of the heat dissipation airflow channel 301 away from the support base 32, which can increase the surface area of a side of the vision component 11 toward the heat dissipation airflow channel 301 and improve heat dissipation efficiency of the vision component 11. A cross-section of the heat dissipation airflow channel 301 along the width direction X of the traveling apparatus 110 is generally trumpet-shaped. After absorbing heat dissipated by the vision component 11 and the support base 32, air expands by heat. The trumpet-shaped cross-section of the heat dissipation airflow channel 301 is conducive to timely flow of hot air out from the heat dissipation airflow channel 301, thereby timely taking away the heat.

The vision component 11 comprises a housing 111 and a vision assembly 13 disposed in the housing 111. The vision assembly 13 comprises a camera 131, a circuit board 132, and a fixing bracket 133. The fixing bracket 133 is fixedly connected to the housing 111. The camera 131 and the circuit board 132 are respectively installed and fixed on the fixing bracket 133. The camera 131 is electrically connected to the circuit board 132. The circuit board 132 is thermally conductively connected to the housing 111 to conduct heat to out of the housing 111. In some embodiments, a heat conducting member is provided between the circuit board 132 and the housing 111 to improve heat conducting efficiency. Exemplarily, the heat conducting member may be configured as thermal grease. A camera hole 1113 is defined at a side of the housing 111 proximate to the front end of the robot 100. The camera 131 is disposed corresponding to the camera hole 1113.

The vision component 11 comprises a first housing 1101 and a second housing 1102. The first housing 1101 is fixedly connected to the support base 32. Along the front-rear direction Y of the traveling apparatus 110, the second housing 1102 is connected to a rear end of the first housing 1101. In some embodiments, the support base 32 can be fixedly connected to the second housing 1102, or respectively fixedly connected to the first housing 1101 and the second housing 1102.

The heat dissipation airflow channel 301 comprises a first heat dissipation section 3011 and a second heat dissipation section 3012. The first heat dissipation section 3011 is located between the first housing 1101 and the traveling apparatus 110. The second heat dissipation section 3012 is located between the second housing 1102 and the traveling apparatus 110. A height along the height direction Z of the traveling apparatus 110 of an end of the first heat dissipation section 3011 away from the second heat dissipation section 3012 is greater than a height along the height direction Z of the traveling apparatus 110 of an end proximate to the second heat dissipation section 3012. From the first heat dissipation section 3011 toward the second heat dissipation section 3012, the height of the first heat dissipation section 3011 decreases. During traveling of the traveling apparatus 110, the cross-sectional flow area of air flowing through the first heat dissipation section 3011 decreases and air speed increases. Increase in air speed can improve heat exchange efficiency between the vision component 11 and air, thereby improving heat dissipation effect of the vision component 11.

A height along the height direction Z of the traveling apparatus 110 of an end proximate to the first heat dissipation section 3011 of the second heat dissipation section 3012 is less than a height along the height direction Z of the traveling apparatus 110 of an end away from the first heat dissipation section 3011. Wherein, when air flows from the first heat dissipation section 3011 into the second heat dissipation section 3012, the circulation area of air increases and air expands. Air absorbs heat during expansion, thereby further absorbing heat dissipated by the second housing 1102 and improving heat dissipation efficiency of the vision component 11. In some embodiments, the height along the height direction Z of the traveling apparatus 110 of the end proximate to the first heat dissipation section 3011 of the second heat dissipation section 3012 is equal to the height along the height direction Z of the end away from the first heat dissipation section 3011.

A dimension along the height direction Z of the traveling apparatus 110 of an end proximate to the first housing 1101 of the second housing 1102 is greater than a dimension along the height direction Z of the traveling apparatus 110 of an end away from the first housing 1101. Thus, when air flows through the second housing 1102, a flow layer attached to the outer surface of the second housing 1102 will be formed, thereby improving heat exchange efficiency between the second housing 1102 and air.

A plurality of heat dissipation sheets 311 located within the heat dissipation airflow channel 301 are provided on at least one of the vision component 11 and the mounting base 31. The heat dissipation sheet 311 can increase the contact area with the air, thereby improving heat dissipation efficiency. The plurality of heat dissipation sheets 311 arranged at intervals along the width direction X of the traveling apparatus 110. The plurality of heat dissipation sheets 311 can be disposed parallel to each other and parallel to the extension direction of the heat dissipation airflow channel 301, thereby improving heat dissipation efficiency of the heat dissipation sheet 311 when contacting air. In some embodiments, part of the heat dissipation sheet 311 among the plurality of heat dissipation sheets 311 can also be disposed at an angle to each other.

In at least one embodiment, the plurality of heat dissipation sheets 311 comprise a first heat dissipation sheet 3111 and a second heat dissipation sheet 3112. The vision component 11 is provided with a first heat dissipation sheet 3111 located in the heat dissipation airflow channel 301. Heat of the vision component 11 may be conducted to the first heat dissipation sheet 3111 and dissipated into the air through the first heat dissipation sheet 3111. The support base 32 is provided with a second heat dissipation sheet 3112 located in the heat dissipation airflow channel 301. The vision component 11 conducts heat to the support base 32 through the fixing seat 31, and the support base 32 conducts heat to the air through the second heat dissipation sheet 3112.

Along the front-rear direction Y of the traveling apparatus 110, the distance along the height direction Z of the traveling apparatus 110 between the first heat dissipation sheet 3111 and the second heat dissipation sheet 3112 decreases, so that air speed when flowing through the first heat dissipation sheet 3111 and the second heat dissipation sheet 3112 increases, improving heat dissipation efficiency. Wherein, the trumpet-shaped cross-section of the heat dissipation airflow channel 301 along the width direction X of the traveling apparatus 110 can also let a side of the vision component 11 toward the heat dissipation airflow channel 301 be provided with more first heat dissipation sheet 3111, further improving heat dissipation efficiency of the vision component 11.

A surface of a side toward the front end of the traveling apparatus 110 along the front-rear direction Y of the traveling apparatus 110 of the support base 32 is configured as an air guiding surface 322. A side of the air guiding surface 322 proximate to the vision component 11 is inclined toward the rear end of the traveling apparatus 110 relative to a side proximate to the traveling apparatus 110. During traveling of the traveling apparatus 110, the air guiding surface 322 can guide air toward the direction away from the ground. After flowing upward through the vision component 11, the air is stopped by the occlusion component 20 and enters the gap 201, thereby letting more air enter the gap 201 and improving air speed in the gap 201, and further improving heat dissipation effect of the vision component 11.

The surface of the side of the vision component 11 proximate to the front end of the traveling apparatus 110 may be configured as a plane, to facilitate air to flow through the vision component 11 under guidance of the air guiding surface 322, reducing resistance of the vision component 11 to air. The side proximate to the front end of the traveling apparatus 110 of the vision component 11 is provided protruding toward the front end of the traveling apparatus 110 relative to the air guiding surface 322, and a connection position between the air guiding surface 322 and the vision component 11 is located at a side of the vision component 11 toward the traveling apparatus 110. In some embodiments, the side proximate to the front end of the traveling apparatus 110 of the vision component 11 is connected with a side proximate to the rear end of the traveling apparatus 110 of the air guiding surface 322, to reduce obstruction to air by the vision component 11, and let air flow more quickly from the air guiding surface 322 into the gap 201, improving air speed in the gap 201.

A side toward the occlusion component 20 of the vision component 11 is provided with a protrusion 1114. Along the height direction Z of the traveling apparatus 110, a height of a side proximate to the front end along the front-rear direction Y of the traveling apparatus 110 of the protrusion 1114 above the ground is less than a height of a side proximate to the rear end above the ground. The protrusion 1114 is provided at a middle position of the vision component 11 along the width direction X of the traveling apparatus 110. The occlusion component 20 corresponds to the protrusion 1114 and is provided protruding toward the direction away from the vision component 11.

The protrusion 1114 and the air guiding surface 322 are arranged side by side along the front-rear direction Y of the traveling apparatus 110, which can reduce a turning radius when air flows into the gap 201, reduce air speed loss, and improve air speed in the gap 201, thereby better dissipating heat of the vision component 11. Wherein, the protrusion 1114 and the air guiding surface 322 may be aligned along the front-rear direction Y of the traveling apparatus 110, i.e., both the protrusion 1114 and the air guiding surface 322 are located at the middle position of the vision component 11 along the width direction X of the traveling apparatus 110, so that more air flowing over the air guiding surface 322 enters the position of the gap 201 corresponding to the protrusion 1114, improving flow speed of air in the gap 201. In some embodiments, the protrusion 1114 and the air guiding surface 322 may be staggered along the width direction X of the traveling apparatus 110.

The vision component 11 further comprises a protective member 134 provided on a side of the housing 111 corresponding to the camera hole 1113. The protective member 134 is configured to cover the camera hole 1113, avoiding entry of external moisture and sundries into the housing 111 through the camera hole 1113. The protective member 134 is configured as a light-transmitting structure at a position corresponding to the camera hole 1113, so that the camera 131 can capture image information in front of the robot 100 through the camera hole 1113.

The vision component 11 further comprises a connection cable 135. The connection cable 135 is configured to electrically connect the circuit board 132 with other parts of the robot 100. A connection hole 321 for the connection cable 135 to pass through is defined on the support base 32. The vision component 11 further comprises a connector 312 sealingly connected at the connection hole 321. A through hole is defined on the connector 312, and the connection cable 135 is passed through the connector 312.

The above is only a specific embodiment of the present disclosure, but the protection scope of the present disclosure is not limited thereto. Any person skilled in the art can easily think of various equivalent modifications or replacements within the technical scope disclosed in the present disclosure, all of which shall be covered within the protection scope of the present disclosure. Therefore, the protection scope of the present disclosure shall be subject to the protection scope of the claims.

## Claims

1. A vision apparatus, applied to a traveling apparatus, wherein the vision apparatus comprises:
a vision component, disposed on a robot; and
an occlusion component, the occlusion component comprising an occlusion body and a support portion,
wherein the occlusion body is disposed on a side of the vision component away from the robot along a height direction of the robot, and a gap is provided between the occlusion body and the vision component; wherein the support portion is connected to an end of the occlusion body and protrudes relative to the occlusion body toward the vision component; and wherein the vision component is provided with a fixing portion configured to cooperate with the support portion, and the support portion and the fixing portion being detachably arranged relative to each other along a direction perpendicular to the height direction of the robot.

2. The vision apparatus according to claim 1, wherein the occlusion body is arched.

3. The vision apparatus according to claim 1, wherein the occlusion body comprises a top plate and a first side plate, the first side plate is connected to a side of the top plate, and the first side plate is inclined toward the vision component relative to the top plate.

4. The vision apparatus according to claim 3, wherein, along a front-rear direction of the robot, a height of a side of the top plate proximate to a front end of the robot above the ground is less than a height of a side of the top plate proximate to a rear end of the robot above the ground.

5. The vision apparatus according to claim 3, wherein the top plate comprises a main body portion and a first connection portion, the first connection portion is connected between the main body portion and the first side plate, the first connection portion is inclined relative to the main body portion toward a direction closer to the vision component, and the first connection portion is inclined relative to the first side plate toward a direction away from the vision component.

6. The vision apparatus according to claim 3, wherein the occlusion body further comprises a second side plate, the first side plate and the top plate are arranged along a width direction of the robot, the second side plate is connected to a side of the first side plate proximate to a rear end of the robot along a front-rear direction of the robot, and the second side plate is inclined toward the visual component relative to the first side plate.

7. The vision apparatus according to claim 6, wherein the occlusion body further comprises a second connection portion, the second connection portion is connected to a side of the top plate proximate to the rear end of the robot, and a side portion of the second connection portion along the width direction of the robot is connected to the second side plate.

8. The vision apparatus according to claim 1, wherein one of the support portion and the fixing portion is configured as a hook, and the other of the support portion and the fixing portion defines a locking hole configured to engage with the hook.

9. The vision apparatus according to claim 1, wherein a side of the occlusion body toward the vision component is provided with a positioning structure, and the vision component is provided with a cooperating structure configured to cooperate with the positioning structure.

10. The vision apparatus according to claim 9, wherein the positioning structure is slidably disposed relative to the cooperating structure along the height direction of the robot.

11. The vision apparatus according to claim 1, wherein the vision apparatus further comprises a reinforcing rib connected to the support portion and the occlusion body respectively.

12. The vision apparatus according to claim 1, wherein the vision apparatus further comprises a heat dissipation structure disposed between the vision component and the occlusion body, and the heat dissipation structure is thermally conductively connected to the vision component.

13. The vision apparatus according to claim 12, wherein the heat dissipation structure is spaced apart from the shielding body.

14. The vision apparatus according to claim 12, wherein the heat dissipation structure comprises a plurality of heat dissipation fins arranged at intervals.

15. The vision apparatus according to claim 1, wherein along a front-rear direction of the robot, an air outlet communicating with the gap is provided at the middle of the occlusion body proximate to a rear end of the robot.

16. The vision apparatus according to claim 1, wherein the occlusion body is provided protruding toward a front end of the robot relative to the vision component along a front-rear direction of the robot, and/or, the occlusion body is provided protruding relative to the vision component along a width direction of the robot.

17. The vision apparatus according to claim 1, wherein a reflective structure is provided on a side of the occlusion body away from the vision component.

18. The vision apparatus according to claim 1, wherein the vision apparatus further comprises a support base, the support base is fixedly connected to the traveling apparatus, the vision component is fixedly connected to an end of the support base away from the traveling apparatus, the vision component is provided protruding relative to the support base along a width direction of the traveling apparatus, and a first heat dissipation airflow channel is formed between a portion of the vision component protruding relative to the support base and the traveling apparatus.

19. The vision apparatus according to claim 18, wherein along the width direction of the traveling apparatus, a height of a side of the first heat dissipation airflow channel proximate to the support base is less than a height of a side away from the support base.

20. The vision apparatus according to claim 18, wherein the vision component comprises a first housing and a second housing, along a front-rear direction of the traveling apparatus, the second housing is connected to a rear end of the first housing, the first heat dissipation airflow channel comprises a first heat dissipation section and a second heat dissipation section, the first heat dissipation section is located between the first housing and the traveling apparatus, and the second heat dissipation section is located between the second housing and the traveling apparatus.

21. The vision apparatus according to claim 20, wherein a height along a height direction of the traveling apparatus of an end of the first heat dissipation section away from the second heat dissipation section is greater than a height along the height direction of the traveling apparatus of an end of the first heat dissipation section proximate to the second heat dissipation section.

22. The vision apparatus according to claim 20, wherein a height along a height direction of the traveling apparatus of an end of the second heat dissipation section proximate to the first heat dissipation section is less than or equal to a height along the height direction of the traveling apparatus of an end of the second heat dissipation section away from the first heat dissipation section.

23. The vision apparatus according to claim 20, wherein a dimension along a height direction of the traveling apparatus of an end of the second housing proximate to the first housing is greater than a dimension along the height direction of the traveling apparatus of an end of the second housing away from the first housing.

24. The vision apparatus according to claim 18, wherein the vision apparatus further comprises a fixing seat, the fixing seat is connected between the traveling apparatus and the support base, the fixing seat is provided protruding relative to the support base along the width direction of the traveling apparatus, the first heat dissipation airflow channel is formed between the fixing seat and the vision component, and a plurality of heat dissipation sheets located within the first heat dissipation airflow channel are provided on the vision component and/or the fixing seat.

25. The vision apparatus according to claim 24, wherein the vision component is provided with a first heat dissipation sheet located in the first heat dissipation airflow channel, the fixing seat is provided with a second heat dissipation sheet located in the first heat dissipation airflow channel, and from a front end toward a rear end of the traveling apparatus, a distance along a height direction of the traveling apparatus between the first heat dissipation sheet and the second heat dissipation sheet decreases.

26. The vision apparatus according to claim 24, wherein the plurality of heat dissipation sheets arranged at intervals along the width direction of the traveling apparatus.

27. The vision apparatus according to claim 18, wherein a surface of a side of the support base toward the front end of the traveling apparatus along the front-rear direction of the traveling apparatus is configured as an air guiding surface, and a side of the air guiding surface proximate to the vision component is inclined toward the rear end of the traveling apparatus relative to a side of the air guiding surface proximate to the traveling apparatus.

28. The vision apparatus according to claim 27, wherein a side of the vision component toward the occlusion component is provided with a protrusion, and along a height direction of the traveling apparatus, a height of a side of the protrusion proximate to the front end of the traveling apparatus along the front-rear direction of the traveling apparatus above the ground is less than a height of a side proximate to the rear end of the traveling apparatus above the ground.

29. The vision apparatus according to claim 28, wherein the protrusion and the air guiding surface are arranged side by side along the front-rear direction of the traveling apparatus.

30. The vision apparatus according to claim 28, wherein the side of the vision component toward the occlusion component is provided with a plurality of heat dissipation fins, and the plurality of heat dissipation fins arranged at intervals along the width direction of the traveling apparatus.

31. The vision apparatus according to claim 30, wherein the plurality of heat dissipation fins comprise a first heat dissipation fin group and a second heat dissipation fin group, each of the first heat dissipation fin group and the second heat dissipation fin group comprising a plurality of the heat dissipation fins; and wherein the first heat dissipation fin group is disposed on the protrusion, and the second heat dissipation fin group is disposed on the vision component at a position other than the protrusion.

32. A robot, comprising a traveling apparatus and the vision apparatus according to any one of claims 1 to 31, wherein the vision apparatus is mounted on the traveling apparatus.
